(19) Europäisches Patentamt
European Patent Office
Office européen des brevets

(11) **EP 3 259 837 B1**

(12) **FASCICULE DE BREVET EUROPEEN**

(45) Date de publication et mention de la délivrance du brevet:
**28.08.2019 Bulletin 2019/35**

(21) Numéro de dépôt: **16705211.7**

(22) Date de dépôt: **19.02.2016**

(51) Int Cl.:
***H02M 3/335*** *(2006.01)*

(86) Numéro de dépôt international:
**PCT/EP2016/053605**

(87) Numéro de publication internationale:
**WO 2016/131980 (25.08.2016 Gazette 2016/34)**

(54) **ALIMENTATION À DÉCOUPAGE À BRANCHES COMMANDÉES**

SCHALTNETZTEIL MIT SCHALTZWEIGSSTEUEREUNG

SWITCH MODE POWER SUPPLY WITH CONTROLLED SWITCHES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.02.2015 FR 1551470**

(43) Date de publication de la demande:
**27.12.2017 Bulletin 2017/52**

(73) Titulaire: **Devialet**
**75001 Paris (FR)**

(72) Inventeurs:
• **PERNOT, Mathieu**
**91260 Juvisy-sur-Orge (FR)**
• **HUFFENUS, Alexandre**
**38000 Grenoble (FR)**
• **CALMEL, Pierre-Emmanuel**
**78150 Le Chesnay (FR)**

(74) Mandataire: **Lavoix**
**2, place d'Estienne d'Orves**
**75441 Paris Cedex 09 (FR)**

(56) Documents cités:
**US-A1- 2004 136 209     US-A1- 2014 192 560**

**Description**

La présente invention concerne une alimentation à découpage comportant :

- une entrée pour un courant d'entrée sous une tension d'entrée ;
- un pont de transistors commandés comportant deux branches comportant chacune deux transistors en série, les deux branches étant reliées en parallèle aux bornes de l'entrée ;
- un transformateur dont le primaire est relié entre les points milieux des deux branches formés entre les transistors en série de chaque branche;
- une sortie pour un courant de sortie reliée aux bornes d'un circuit secondaire du transformateur ; et
- une unité de commande des transistors pour basculer chacun des points milieux, de manière alternative, entre des valeurs haute et basse avec un décalage temporel entre les instants de basculement des valeurs des points milieux.

De nombreux appareils électroniques sont alimentés à partir du réseau public distribuant une tension périodique sinusoïdale à travers une alimentation à découpage propre à fournir une tension continue d'alimentation. Tel est le cas par exemple des amplificateurs haute-fidélité et des ordinateurs portables lors de leur rechargement.

Les transistors utilisés dans les branches de commutation de l'alimentation à découpage comportent intrinsèquement une capacité parasite entre le drain et la source de chaque transistor. Ces capacités se chargent et se déchargent lors de chaque commutation conduisant à une dissipation d'énergie importante.

Il est connu pour éviter un échauffement trop important de prévoir entre les deux points milieu des deux branches, une inductance en série avec le bobinage du primaire du transformateur, afin de permettre un échange d'énergie périodique entre les condensateurs parasites des transistors et cette inductance.

En outre, il est connu de prévoir un temps mort (deadtime en anglais) entre les instants de commutation des deux transistors d'une même branche afin d'éviter le phénomène de conduction simultanée. C'est au cours de ce temps mort qu'a lieu l'échange d'énergie entre les condensateurs parasites et l'inductance, limitant le phénomène de « hard-switching » des transistors.

Ces mécanismes permettent de réduire l'échauffement mais celui-ci reste très élevé, notamment lorsque l'alimentation à découpage est utilisée pour alimenter un amplificateur audio, puisque dans ce cas l'énergie fournie par l'alimentation varie fréquemment et très rapidement d'un cycle à l'autre.

Le document US 2004/136209 A1 divulgue une alimentation à découpage proche de la présente invention.

L'invention a pour but de permettre de réduire encore l'échauffement local de l'alimentation à découpage, permettant ainsi d'augmenter sa puissance pour des transistors de commutation identiques.

A cet effet, l'invention a pour objet une alimentation à découpage du type précité, caractérisée en ce que l'unité de commande est propre à ce que l'ordre temporel de basculement des points milieux entre leurs valeurs hautes et basses varie au cours du temps.

Suivant des modes particuliers de réalisation, l'alimentation à découpage comporte l'une ou plusieurs des caractéristiques suivantes :

- l'ordre temporel de basculement des points milieux est conservé pendant un même nombre de basculements des deux points milieux avant chaque inversion de l'ordre temporel de basculement ;
- l'unité de commande est propre à ce que l'ordre temporel de basculement varie pour chaque période du signal périodique d'alimentation ;
- l'unité de commande est propre à ce que les deux transistors d'une même branche sont commutés avec un temps mort séparant les instants de commutation des deux transistors de la même branche pour le basculement du point milieu entre ses valeurs haute et basse et les temps morts appliqués lors d'une même commutation sur deux branches sont différents ;
- les temps morts de chaque branche dépendent de l'ordre temporel de basculement des deux points milieux ;
- ladite alimentation comporte un circuit de redressement connecté entre les bornes du circuit secondaire du transformateur et la sortie.

L'invention a également pour objet un amplificateur comportant un étage d'amplification et une alimentation à découpage telle que définie ci-dessus.

L'invention sera mieux comprise à la lecture de la description qui va suivre, donnée uniquement à titre d'exemple et faite en se référant aux dessins sur lesquels :

- la figure 1 est un circuit schématique de l'alimentation à découpage selon l'invention intégrée dans un amplificateur ; et
- la figure 2 est un schéma synoptique du mode de commande des interrupteurs mis en oeuvre dans l'alimentation illustrée sur la figure 1 et ses conséquences sur l'intensité du courant i circulant dans le primaire du transformateur.

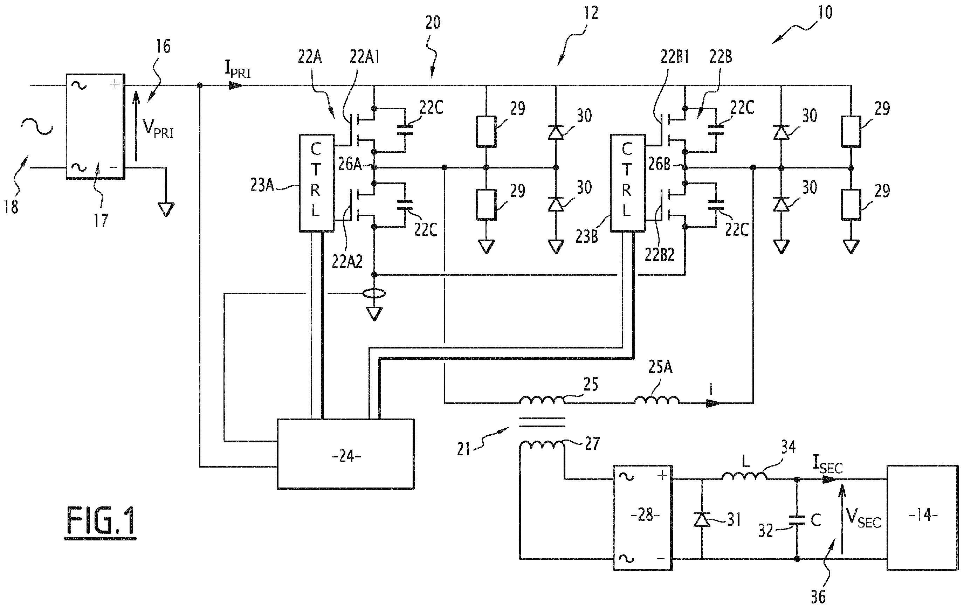

Sur la figure 1 est illustré un amplificateur haute-fidélité 10 comportant une alimentation à découpage 12 alimentant un étage d'amplification 14. L'étage d'amplification 14 est de tout type adapté.

L'alimentation à découpage 12 présente une entrée 16 propre à être reliée en sortie d'un pont redresseur de diodes 17 alimenté depuis un réseau d'alimentation 18 fournissant une tension sinusoïdale par exemple de 230 V à une fréquence de 50 ou 60 Hz.

Pour l'alimentation à découpage, la tension d'entrée est notée $V_{PRI}$ et l'intensité traversant l'entrée 16 est noté $I_{PRI}$. La période de la tension Vpri est notée $T_{in}$.

L'entrée 16 est reliée directement, sans interposition d'un circuit de type boost à l'entrée d'un pont de transistors 20 dont la sortie est reliée à un transformateur 21.

Comme connu en soi, le pont de transistors 20 comporte deux branches parallèles 22A, 22B comportant chacune deux transistors commandés montés en série 22A1, 22A2 et 22B1, 22B2 respectivement.

Les deux branches 22A, 22B sont reliées entre les deux bornes de l'entrée 16, dont l'une forme la masse. Les points de connexion des transistors d'une même branche constituent la sortie du pont de transistors.

Chacun des transistors est constitué par exemple d'un transistor de type MOS et ces transistors sont commandés par un circuit de commande 23A, 23B propre à chaque branche 22A, 22B, lui-même relié à une unité centrale de pilotage 24 formant ensemble une unité de commande.

Chaque transistor 22A1, 22A2, 22B1, 22B2 comporte par construction un condensateur parasite 22C illustré sur la figure 1 connecté entre son drain et sa source.

Le transformateur 21 comporte un circuit primaire 25 relié entre les deux points milieux 26A, 26B des branches 22A, 22B au travers d'une inductance 25A. Ces points milieux sont situés entre les deux transistors montés en série de chaque branche 22A, 22B.

Le circuit secondaire 27 du transformateur est relié aux bornes d'entrée d'un circuit de redressement 28 formé par exemple d'un pont de diodes connu en soi.

Les points milieux 26A, 26B sont chacun reliés aux deux bornes d'entrées 16 par une résistance 29 de valeur élevée par exemple égale à 1MΩ et par une diode 30. Ainsi, la résistance et la diode sont montées en parallèle du transistor entre le drain et la source.

La diode est formée soit par un composant discret ajouté, soit par la diode formée par construction dans le transistor MOS comme connu en soi. Ces diodes sont propres à assurer que la tension entre le drain et la source ne dépasse pas une tension de référence.

Une diode 31 est reliée entre les deux bornes de sortie du pont de diodes 28.

La sortie du pont de diodes 28 est reliée également à un condensateur 32 de stockage au travers d'une inductance 34. Cette inductance est disposée entre la cathode de la diode 31 et l'une des bornes du condensateur 32. La sortie notée 36 de l'alimentation à découpage est formée aux bornes du condensateur 32.

Des moyens de mesure de l'intensité d'entrée $I_{PRI}$ et de l'intensité totale circulant dans les branches de commutation 22A, 22B sont prévus et reliés à l'unité centrale de pilotage 24. Ils sont formés chacun par exemple d'une résistance respectivement aux bornes de laquelle la tension est mesurée, cette tension étant proportionnelle à l'intensité circulant dans la résistance.

L'unité de commande 24, 23A, 23B est propre à assurer une commutation du pont de transistors avec une fréquence fixe de période T, comprise typiquement entre 20 kHz et 500 kHz. La commutation du pont est interrompue lorsque $V_{pri}$ avoisine 0.

La commutation des transistors sur les branches 22A ou 22B est commandée de sorte que l'ordre de basculement d'une valeur basse à une valeur haute des deux points milieux 26A, 26B varie périodiquement au cours du temps à une fréquence plus petite que la fréquence de commutation T des transistors des branches 22A, 22B, et notamment d'une période $T_{in}$ à la période suivante.

Ainsi, le basculement des points milieux 26A, 26B suit une première loi pendant les périodes $T_{in}$ d'ordre pair et une seconde loi différente pendant les périodes d'ordre impair.

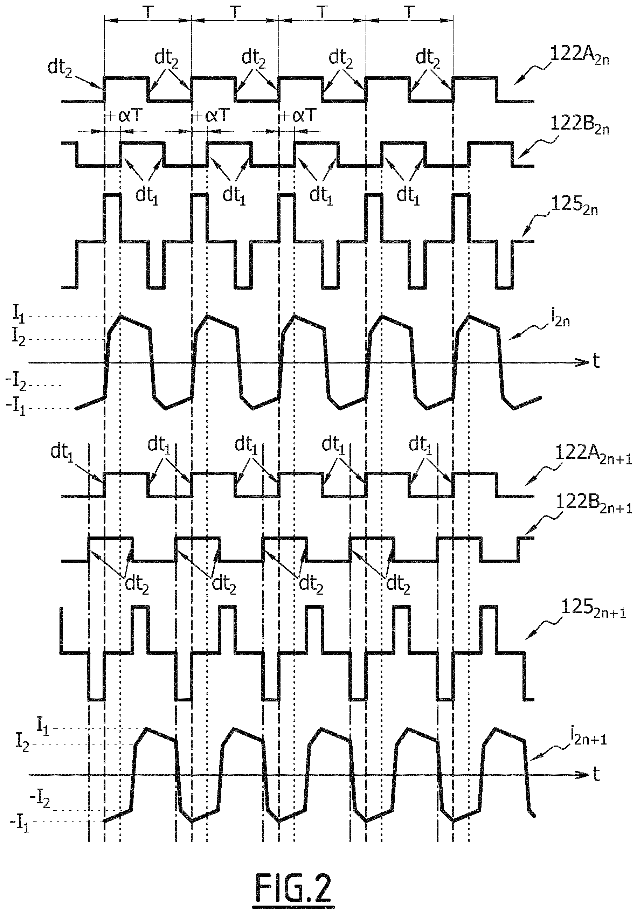

La figure 2 illustre la forme des tensions et courant en différents points du circuit dans la moitié haute de la figure pour des périodes $T_{in}$ paires et dans la moitié basse de la figure pour des périodes $T_{in}$ impaires.

Les deux courbes $122A_{2n}$, $122B_{2n}$ respectivement $122A_{2n+1}$, $122B_{2n+1}$ de la figure 2 représentent la tension aux points milieux 26A, 26B et la troisième courbe $125_{2n}$, respectivement $125_{2n+1}$ représente la différence de potentiel aux bornes du primaire 25 du transformateur pour des périodes $T_{in}$ paires respectivement impaires.

Les points milieux 26A, 26B basculent, lors de la commutation des transistors de la branche considérée entre la masse (tension basse notée 0) et $V_{pri}$ (tension haute notée 1).

La commande est telle qu'au point milieu 26A, la tension est haute pendant une demi-période T/2 et basse pendant une demi-période T/2, ceci de manière régulière. Sous l'effet de la commande, le point milieu 26B bascule entre les deux mêmes valeurs que le point milieu 26A de manière décalée temporellement par rapport au basculement de la tension au point milieu 26A avec un retard ou une avance notée $\pm \alpha$T, $\alpha$ étant compris strictement entre 0 et 1. La durée de maintien du signal au point 26B à l'état haut est identique pour les points milieux 26A et 26B et est égale à la demi-période T/2.

Le tableau qui suit indique par les points milieux 26A et 26B, pour chaque période $T_{in}$ d'ordre pair ou impair de la tension d'entrée Vpri l'instant de basculement de l'état bas (noté 0) vers l'état haut (noté 1) et l'instant de basculement de l'état haut vers l'état bas.

**Tableau 1**

| Sens de basculement : | Période $T_{in}$ paire | | Période $T_{in}$ impaire | |
|---|---|---|---|---|
| | Instant de basculement | Dead time | Instant de basculement | Dead time |
| **pour 25A** | | | | |
| 0 vers 1 | $n$T | dt2 | $n$T | dt1 |
| 1 vers 0 | $(n+\dfrac{1}{2})$T | dt2 | $(n+\dfrac{1}{2})$T | dt1 |
| **pour 25B** | | | | |
| 0 vers 1 | $(n + \alpha)$T | dt1 | $(n - \alpha)$T | dt2 |
| 1 vers 0 | $(n+\dfrac{1}{2}+\alpha)$T | dt1 | $(n+\dfrac{1}{2}-\alpha)$T | dt2 |

Pour toutes les périodes $T_{in}$ de la tension d'entrée $V_{pri}$ paires, les basculements vers l'état haut et vers l'état bas du point milieu 26B sont en retard sur le basculement vers le même état du point milieu 26A, d'un retard $\alpha$T, ceci pour tous les cycles de basculement n où n entier est compris entre 0 et $T_{in}$/T.

En revanche, pour les périodes $T_{in}$ de la tension d'entrée $V_{pri}$ impaires, les basculements de l'état bas vers l'état haut et de l'état haut vers l'état bas du point milieu 26B sont en avance sur les basculements correspondants du point milieu 26A d'une avance égale à -$\alpha$T.

Ce décalage temporel $\pm \alpha$T et cette inversion de l'ordre des instants de basculement des points milieux 26A et 26B sont illustrés sur la figure 2 où l'on constate sur la première période correspondant aux périodes $T_{in}$ d'ordre pair, que le point milieu 26B bascule vers la valeur haute avec un retard égal à $\alpha$T par rapport au basculement vers la valeur haute du point milieu 26A. Il en est de même pour le basculement vers la valeur basse.

En revanche, sur les périodes $T_{in}$ d'ordre impair, le basculement vers la valeur haute et la valeur basse du point milieu 26B s'effectue avec une avance de - $\alpha$T par rapport au basculement du point milieu 26A.

Sur la quatrième courbe $i_{2n}$, respectivement $i_{2n+1}$ est illustrée la valeur du courant i circulant dans le circuit primaire 25 et donc dans les transistors à commuter lors des périodes $T_{in}$ paires respectivement impaires. On constate sur ces courbes que, l'intensité circulant dans la branche de commutation basculant en retard est supérieure en valeur absolue à l'intensité circulant dans la branche en avance à l'instant de commutation puisqu'elle est égale à I1 contre I2 avec I1>I2 par application d'une tension constante aux bornes du transformateur 25 et de l'inductance 25A.

En alternant l'ordre de basculement des branches de commutation d'une période $T_{in}$ sur l'autre période, les deux branches sont soumises à la même intensité moyenne lors de la commutation des transistors puisqu'elles sont soumises une fois à l'intensité I1 et une fois à l'intensité I2.

Dans ces conditions, les deux branches subissent un échauffement identique lequel échauffement est inférieur à l'échauffement qu'aura subi une branche de commutation si celle-ci avait toujours été basculée en retard par rapport à l'autre branche comme c'est le cas dans l'état de la technique.

Ainsi, cela permet d'obtenir une meilleure répartition thermique entre les deux branches et permet donc une optimisation du système.

En outre, la commande des transistors est telle que, lors de la commutation sur chaque branche, les deux transistors de la même branche sont commutés avec un décalage élémentaire qualifié de temps mort et connu sous l'expression anglaise « dead time » assurant que la tension entre drain et source d'un transistor soit minimisée lorsqu'il est commuté de son état bloqué à son état passant.

Comme indiqué dans le tableau 1, les retards élémentaires indiqués dt1, dt2 sont différents suivant que le point milieu 26A, 26B de la branche soit basculé en premier ou en second.

Ainsi, lorsque le point milieu est basculé en avance, un retard élémentaire dt2 correspondant à l'intensité I2 est appliqué alors que lorsque le point milieu est basculé en retard, un retard élémentaire dt1 correspondant à l'intensité I1 est appliqué.

Ainsi, alternativement sur chaque période T$_{in}$, un retard élémentaire dt1 ou dt2 est appliqué.

Les valeurs des retards dt1 et dt2 sont différentes puisque les courants circulants dans les transistors et donc les vitesses de charge/décharge des condensateurs sont différentes. En particulier, dt1 est inférieur à dt2 puisqu'il est appliqué alors que l'intensité I1 (en valeur absolue) du courant circulant dans le primaire du transformateur et donc dans les transistors en conduction est supérieur à I2 (en valeur absolue).

Ces retards élémentaires sont rappelés sur les courbes de la figure 2, même si les instants de commutation légèrement décalés des transistors n'apparaissent pas sur cette figure où seul le basculement de la tension de manière macroscopique est représenté pour chaque point milieu 26A, 26B.

Dans l'exemple décrit ici, la période T$_{in}$ de basculement de l'ordre des commandes entre les deux branches est égale à la période du réseau d'alimentation. En variante, cette période est indépendante de celle du réseau d'alimentation.

## Revendications

1.  Alimentation à découpage comportant :

    - une entrée (16) pour un courant d'entrée (I$_{PRI}$) sous une tension d'entrée (V$_{PRI}$).
    - un pont de transistors commandés (22A1, 22A2, 22B1, 22B2) comportant deux branches (22A, 22B) comportant chacune deux transistors en série, les deux branches (22A, 22B) étant reliées en parallèle aux bornes de l'entrée (16) ;
    - un transformateur (21) dont le primaire (25) est relié entre les points milieux (26A, 26B) des deux branches (22A, 22B) formés entre les transistors en série de chaque branche (22A, 22B) ;
    - une sortie pour un courant de sortie (I$_{SEC}$) reliée aux bornes d'un circuit secondaire (27) du transformateur (21) ; et
    - une unité de commande (23A, 23B, 24) des transistors pour basculer chacun des points milieux (26A, 26B), de manière alternative, entre des valeurs haute et basse avec un décalage temporel ($\alpha$T) entre les instants de basculement des valeurs des points milieux (26A, 26B),
    **caractérisée en ce que** l'unité de commande (23A, 23B, 24) est propre à ce que l'ordre temporel de basculement des points milieux (26A, 26B) entre leurs valeurs hautes et basses varie au cours du temps.

2.  Alimentation selon la revendication 1, **caractérisée en ce que** l'ordre temporel de basculement des points milieux (26A, 26B) est conservé pendant un même nombre de basculements des deux points milieux (26A, 26B) avant chaque inversion de l'ordre temporel de basculement.

3.  Alimentation selon la revendication 1 ou 2, **caractérisée en ce que** l'unité de commande (23A, 23B, 24) est propre à ce que l'ordre temporel de basculement varie pour chaque période du signal périodique d'alimentation.

4.  Alimentation selon l'une quelconque des revendications, **caractérisée en ce que** l'unité de commande (23a, 23B, 24) est propre à ce que les deux transistors d'une même branche sont commutés avec un temps mort (dt$_1$, dt$_2$) séparant les instants de commutation des deux transistors de la même branche pour le basculement du point milieu (26A, 26B) entre ses valeurs haute et basse et **en ce que** les temps morts (dt$_1$, dt$_2$) appliqués lors d'une même commutation sur deux branches sont différents.

5.  Alimentation selon la revendication 4, **caractérisée en ce que** les temps morts (dt$_1$, dt$_2$) de chaque branche dépendent de l'ordre temporel de basculement des deux points milieux (26A, 26B).

6.  Alimentation selon l'une quelconque des revendications précédentes, **caractérisée en ce qu'**elle comporte un circuit de redressement (28) connecté entre les bornes du circuit secondaire (27) du transformateur (21) et la sortie.

## Patentansprüche

1.  Schaltnetzteil mit:

    - einem Eingang (16) für einen Eingangsstrom (I$_{PRI}$) bei einer Eingangsspannung (V$_{PRI}$).
    - eine Brücke von gesteuerten Transistoren (22A1, 22A2, 22B1, 22B2) mit zwei Zweigen (22A, 22B) mit jeweils zwei in Reihe geschalteten Transistoren, wobei die beiden Zweige (22A, 22B) parallel zu den Anschlüssen des Eingangs (16) geschaltet sind;

- einen Transformator (21), dessen Primärwicklung (25) zwischen die Mittelpunkte (26A, 26B) der beiden Zweige (22A, 22B) geschaltet ist, die zwischen den Transistoren in Serie jedes Zweigs (22A, 22B) gebildet werden;

- einen Ausgang für einen Ausgangsstrom ($I_{SEC}$), der mit den Anschlüssen eines Sekundärkreises (27) des Transformators (21) verbunden ist; und

- eine Steuereinheit (23A, 23B, 24) der Transistoren zum Umschalten jedes der Mittelpunkte (26A, 26B) auf alternierende Weise zwischen einem hohen und einem niedrigen Wert mit einem Zeitversatz ($\alpha T$) zwischen den Umschaltzeiten der Werte der Mittelpunkte (26A, 26B),

**dadurch gekennzeichnet, dass** die Steuereinheit (23A, 23B, 24) so eingerichtet ist, dass die zeitliche Reihenfolge des Umschaltens der Mittelpunkte (26A, 26B) zwischen ihren hohen und niedrigen Werten im Laufe der Zeit variiert.

2. Netzteil nach Anspruch 1, **dadurch gekennzeichnet, dass** die zeitliche Reihenfolge des Umschaltens der Mittelpunkte (26A, 26B) während einer gleichen Anzahl von Umschaltungen der beiden Mittelpunkte (26A, 26B) vor jeder Umkehrung der zeitlichen Reihenfolge beibehalten wird.

3. Netzteil nach Anspruch 1 oder 2, **dadurch gekennzeichnet, dass** die Steuereinheit (23A, 23B, 24) so eingerichtet ist, dass die zeitliche Reihenfolge des Umschaltens für jede Periode des periodischen Stromversorgungssignals variiert.

4. Netzteil nach einem der Ansprüche, **dadurch gekennzeichnet, dass** die Steuereinheit (23a, 23B, 24) so eingerichtet ist, dass die beiden Transistoren desselben Zweigs mit einer Totzeit ($dt_1$, $dt_2$) geschaltet werden, die die Schaltzeitpunkte der beiden Transistoren desselben Zweigs zum Umschalten des Mittelpunkts (26A, 26B) zwischen seinem hohen und seinem niedrigen Wert trennt und dadurch, dass die Totzeiten ($dt_1$; $dt_2$) beim selben Schalten auf zwei Zweigen unterschiedlich sind.

5. Netzteil nach Anspruch 4, **dadurch gekennzeichnet, dass** die Totzeiten ($dt_1$, $dt_2$) jedes Zweigs von der zeitliche Reihenfolge des Umschaltens der beiden Mittelpunkte (26A, 26B) abhängen.

6. Netzteil nach einem der vorhergehenden Ansprüche, **dadurch gekennzeichnet, dass** sie eine Gleichrichterschaltung (28) aufweist, die zwischen die Anschlüsse des Sekundärkreises (27) des Transformators (21) und den Ausgang geschaltet ist.

## Claims

1. A switching power supply comprising:

- an input (16) for an input current ($I_{PRI}$) at an input voltage ($V_{PRI}$).
- a controlled transistor bridge (22A1, 22A2, 22B1, 22b2) comprising two branches (22A, 22B) each comprising two transistors connected in series, the two branches (22A, 22B) being connected in parallel to the input terminals (16);
- a transformer (21) whose primary (25) is connected between the midpoints (26A, 26B) of the two branches (22A, 22B) formed between the series-connected transistors of each branch (22A, 22B);
- an output for an output current ($I_{SEC}$) connected to the terminals of a secondary circuit (27) of the transformer (21); and
- a control unit (23A, 23B, 24) for the transistors to switch each of the midpoints (26A, 26B), in an alternating manner, between high and low values with a time offset ($\alpha T$) between the time instants of switching of the midpoint values (26A, 26B),

**characterized in that** the control unit (23A, 23B, 24) is capable of ensuring that the time order for switching of the midpoints (26A, 26B) between the high and low values thereof varies over the course of time.

2. A power supply according to claim 1, **characterized in that** the time order for switching of the midpoints (26A, 26B) is maintained for the same number of switches of the two midpoints (26A, 26B) before each reversal of the switching time order.

3. A power supply according to claim 1 or 2, **characterized in that** the control unit (23A, 23B, 24) is capable of ensuring that the time order for switching varies for each period of the periodic power supply signal.

4. A power supply according to any one of the preceding claims, **characterized in that** the control unit (23a, 23B, 24) is capable of ensuring that the two transistors of the same branch are switched with a dead time ($dt_1$, $dt_2$) separating the switching times of the two transistors of the same branch for the switching of the midpoint (26A, 26B) between the high and low values thereof, and **in that** the dead times ($dt_1$, $dt_2$) applied during the same switching on the two branches are different.

5. A power supply according to claim 4, **characterized in that** the dead times ($dt_1$, $dt_2$) of each branch are dependent on the time order of switching of the two midpoints (26A, 26B).

6. A power supply according to any one of the preceding claims, **characterized in that** it comprises a rectifying circuit (28) connected between the terminals of the secondary circuit (27) of the transformer (21) and the output.

## FIG.1

EP 3 259 837 B1

FIG.2

**EP 3 259 837 B1**

## RÉFÉRENCES CITÉES DANS LA DESCRIPTION

### Documents brevets cités dans la description

• US 2004136209 A1